Europäisches Patentamt

**European Patent Office**

**Office européen des brevets**

(19)

(11) Veröffentlichungsnummer: **0 194 612**

**A2**

(12)

# EUROPÄISCHE PATENTANMELDUNG

(21) Anmeldenummer: **86103083.1**

(51) Int. Cl.⁴: **G 02 B 6/34**

(22) Anmeldetag: **07.03.86**

(30) Priorität: **14.03.85 DE 3509132**

(43) Veröffentlichungstag der Anmeldung:
**17.09.86 Patentblatt 86/38**

(84) Benannte Vertragsstaaten:
**DE FR GB IT**

(71) Anmelder: **Firma Carl Zeiss**

**D-7920 Heidenheim (Brenz)(DE)**

(84) Benannte Vertragsstaaten:
**DE FR IT**

(71) Anmelder: **CARL-ZEISS-STIFTUNG trading as CARL ZEISS**

**D-7920 Heidenheim (Brenz)(DE)**

(84) Benannte Vertragsstaaten:
**GB**

(72) Erfinder: **Blumentritt, Martin**
**Langweidstrasse 23**
**D-7923 Königsbronn(DE)**

(72) Erfinder: **Reule, Alfred, Dr.**
**Kantstrasse 22**
**D-7080 Aalen(DE)**

(72) Erfinder: **Bittner, Reinhold**
**Friedenstrasse 6**
**D-7074 Mögglingen(DE)**

(54) **Wellenlängenmultiplexer oder -demultiplexer.**

(57) Bei einem Multiplexer oder Demultiplexer sind die Lichtleitfasern in eine Lochplatte aus einem photolithographisch ätzbaren Material eingekittet und ihre Abschlußflächen sind mit der Oberfläche der Lochplatte abgeschliffen und poliert. Zum Ausgleich von Fokusdifferenzen ist zwischen dem transparentem Tragkörper und der Oberfläche der Lochplatte eine Platte mit abgestimmter Dicke angeordnet.

## Fig.1

EP 0 194 612 A2

Beschreibung:

Wellenlängenmultiplexer oder -demultiplexer

Die vorliegende Erfindung betrifft einen Wellenlängenmultiplexer oder -demultiplexer bestehend aus einem transparenten Tragkörper mit einem Beugungsgitter und mindestens einer Koppelfläche zum Anschluß von Lichtleitfasern.

Wellenlängenmultiplexer oder -demultiplexer werden in der faseroptischen Nachrichtentechnik zur Erhöhung der Übertragungskapazität verwendet. Dabei wird die modulierte Strahlung von mehreren Lichtquellen verschiedener Wellenlängen gleichzeitig durch einen Lichtwellenleiter übertragen. Zum möglichst verlustarmen Zusammenführen und Trennen der verschiedenen Wellenlängenkanäle am Anfang und Ende der Übertragungsstrecke sind Multiplexer und Demultiplexer bekannt, die entweder mit Beugungsgittern oder mit Interferenzfiltern arbeiten. Ein besonders fester und kompakter Aufbau läßt sich dadurch erreichen, daß der Raum zwischen dem Beugungsgitter oder den Interferenzfiltern und den Lichtleitfasern für die Zu- und Abfuhr der Strahlungen aus einem kompakten Tragkörper aus transparentem Material besteht.

Derartige Multiplexer oder Demultiplexer mit Beugungsgittern sind z.B. aus den Patentanmeldungen EP 0 067 972 und EP 0 093 396 bekannt. Dort sind jeweils an dem transparenten Tragkörper Koppelflächen vorgesehen, an welchen die Lichtleitfasern angekoppelt bzw. angekittet werden. Es liegt auf der Hand, daß die Plazierung der Lichtleitfasern auf den Koppelflächen sehr genau erfolgen muß. Für diejenige Koppelfläche, auf der eine Vielzahl von Lichtleitfasern angekoppelt werden muß, ist dies mit einem erheblichen Justieraufwand und somit hohen Kosten verbunden.

Der vorliegenden Erfindung liegt daher die Aufgabe zugrunde, einen Multiplexer oder Demultiplexer zu schaffen, bei dem insbesondere der Anschluß mehrerer nahe beieinander liegender Lichtleitfasern auf einfache Art und mit einem möglichst geringen Aufwand an Justierarbeiten möglich ist.

Die gestellte Aufgabe wird erfindungsgemäß dadurch gelöst, daß mehrere Lichtleitfasern in einer Lochplatte aus einem photolithographisch ätzbaren Material fixiert sind, daß die Anschlußflächen der Lichtleitfasern gemeinsam mit der Oberfläche der Lochplatte bearbeitet sind und daß die Lochplatte an die Koppelfläche angeschlossen ist.

Das photolithographisch ätzbare Material kann z.B. ätzbares Glas oder Silizium sein. Durch Belichten mit einer Maske und anschließendes Ätzen lassen sich die Bohrungen für die Lichtleitfasern sehr genau in ihrer Lage zueinander auf einfache Weise herstellen. Nachdem die Lichtleitfasern in die Bohrungen z.B. eingekittet sind, können ihre Endflächen zusammen mit der Oberfläche der Lochplatte bearbeitet und poliert werden. Die dabei hergestellte Fläche kann plan oder auch gekrümmt sein. Die in der Lochplatte fixierten Lichtleitfasern werden dann nur noch als Ganzes zu den übrigen Bauteilen des Multiplexers oder Demultiplexers justiert.

Wieviele Lichtleitfasern zu einer derartigen Justiereinheit zusammengefaßt werden, ist eine Frage der Zweckmäßigkeit und hängt vom optischen Design des Multiplexers oder Demultiplexers ab. Bei einem Demultiplexer wird man im allgemeinen alle Ausgangslichtleitfasern zu einer derartigen Justiereinheit zusammenfassen. Es kann aber durchaus zweckmäßig sein, für die Ausgangsfasern mehrere Justiereinheiten vorzusehen, die sowohl an eine gemeinsame Koppelfläche als auch an getrennte Koppelflächen angeschlossen werden können. Andererseits ist es bei entsprechendem optischen Design auch möglich, die Eintrittslichtleitfaser mit den Austrittslichtleitfasern zu einer gemeinsamen Justiereinheit zusammenzufassen. Entsprechendes gilt für Multiplexer.

Es ist günstig, für die Lochplatte eine verhältnismäßig dünne Platte aus ätzbaren Material zu nehmen, da dann die Bohrungen einfacher und mit größerer Genauigkeit eingeätzt werden können. In einer vorteilhaften Ausführungsform wird daher die Lochplatte zur Erhöhung ihrer Stabilität auf der dem Tragkörper abgewandten Seite mit einem Verstärkungsklotz verbunden.

In einer besonders vorteilhaften Ausführungsform der Erfindung besteht
der Verstärkungsklotz aus einem U-förmigen Teil, das in seiner Vertiefung die Lichtleitfasern aufnimmt, und aus einem plattenförmigen Teil,
das auf die Fläche mit der Vertiefung gekittet wird, wobei die Zwischenräume zwischen den Lichtleitfasern und den Teilen des Verstärkungsklotzes ebenfalls mit Kitt ausgefüllt werden. Auf diese Weise wird
die verhältnismäßig dünne Lochplatte der Abschluß einer kompakten und
gut handhabbaren Justiereinheit, so daß sich ihre freie Oberfläche mit
den Endflächen der Lichtleitfasern gut bearbeiten läßt und eine
Lichtleitfaserzeile ergibt.

In einer anderen vorteilhaften Ausführungsform der Erfindung sind die
Lichtleitfasern zusätzlich in einer zweiten Lochplatte aus einem
photolithographisch ätzbaren Material, die in einem definierten Abstand
von der ersten Lochplatte angeordnet ist, fixiert. Diese Ausführungsform ist besonders günstig, wenn die Lichtleitfasern in ihrer Richtung
genau parallel zueinander ausgerichtet werden sollen oder wenn die
Lichtleitfasern fächerförmig angeordnet werden sollen, um eine optimale
Ausleuchtung des Gitters (bei einem Multiplexer) bzw. der Lichtleitfasern (bei einem Demultiplexer) zu erreichen. Im letzteren Fall werden
die Löcher auf der zweiten Lochplatte mit etwas anderen Abständen
angeordnet als auf der ersten Lochplatte.

In einer besonders vorteilhaften Ausführungsform der Erfindung wird
zwischen den beiden Lochplatten ein Zwischenklotz mit definierter Dicke
eingekittet, der einen Ausschnitt für die Lichtleitfasern hat und der
an diesem Ausschnitt vorzugsweise zweigeteilt ist. Die Justierung
dieses Zwischenklotzes und der beiden Lochplatten zueinander kann durch
die äußere Begrenzung dieser Teile erfolgen, indem diese genau
zueinander fluchtend ausgerichtet werden. In einer anderen Ausführungsform hat der Zwischenklotz Aufnahmen für zwei Justierstifte und die
Lochplatten erhalten bei der Herstellung Löcher für die Justierstifte
in definierten Abständen zu den Löchern für die Lichtleitfasern.

In einer weiteren vorteilhaften Ausgestaltung der Erfindung wird für
das Einkitten der Lichtleitfasern in die Lochmaske(n) und das Verkitten
der Lichtleitfasern mit den Teilen des Verstärkungs- bzw. Zwischen-

klotzes ein absorbierender (schwarzer) Kitt verwendet und damit ein geringeres Übersprechen zwischen den einzelnen Lichtleitfasern erreicht.

Bei der Herstellung eines Multiplexers oder Demultiplexers mit einem transparenten Tragkörper besteht keine Fokussiermöglichkeit durch mechanische Verstellung, mit der sich erreichen läßt, daß der Fokus bzw. das Spektrum genau auf der Koppelfläche liegt. Damit trotzdem keine zu engen Toleranzen für die optischen Bauteile, wie z.B. Tragkörper und Gitter, bei der Herstellung eingehalten werden müssen, wird in einer weiteren vorteilhaften Ausgestaltung der Erfindung zwischen dem transparenten Tragkörper und der Oberfläche der Lochplatte bzw. der Lichtleitfaserzeile eine Platte mit abgestimmter Dicke angeordnet:

Die Erfindung wird im folgenden anhand von in den Figuren 1 bis 7 dargestellten Ausführungsbeispielen näher erläutert. Dabei zeigen

Fig. 1    einen Schnitt in der Dispersionsebene durch einen Multiplexer oder Demultiplexer;

Fig. 2    einen Schnitt längs der Linie II...II in Fig. 1;

Fig. 3 ·  einen Schnitt längs der Linie III...III in Fig. 1;

Fig. 4    einen Schnitt längs der Linie IV...IV in Fig. 3;

Fig. 5    einen Schnitt längs der Linie V...V in Fig. 3;

Fig. 6    ein anderes Ausführungsbeispiel für die Ankopplung der Lichtleitfasern mit zwei Lochplatten im vergrößerten Maßstab und

Fig. 7    einen Schnitt längs der Linie VII...VII in Figur 6.

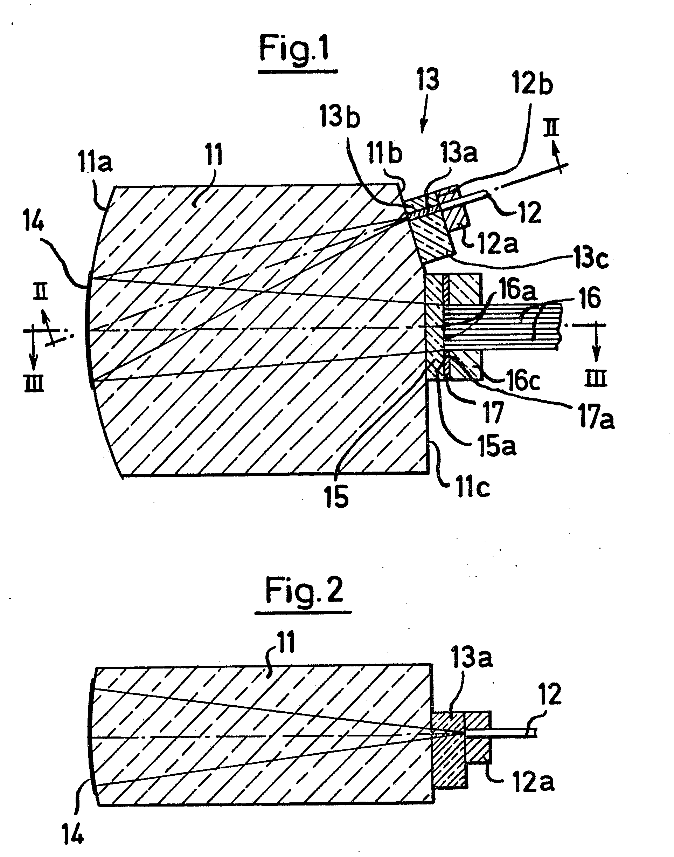

In den Figuren 1 bis 3 ist mit (11) der transparente Tragkörper bezeichnet, der z.B. aus BaF4-Glas hergestellt sein kann. Auf seiner konkaven Fläche (11a) ist in bekannter Technik das Konkavgitter (14) aufkopiert.

Durch dieses Gitter wird bei einem Multiplexer die mit verschiedenen Wellenlängenbereichen aus den Lichtleitfasern (16) in den Tragkörper (11) gelangende Strahlung in die Eintrittsfläche des Lichtleiters (12) fokussiert. Bei einem Demultiplexer wird die aus verschiedenen Wellenlängenbereichen (Kanälen) bestehende und aus der Lichtleitfaser (12) in den Tragkörper (11) eintretende Strahlung durch das Konkavgitter (14) in die einzelnen Wellenlängenbereiche räumlich getrennt und jeder Wellenlängenbereich in eine der Lichtleitfasern (16) weitergeleitet. Die folgende Beschreibung erfolgt für einen Demultiplexer; sie gilt jedoch mit den bekannten Entsprechungen auch für einen Multiplexer.

Die Eingangslichtleitfaser (12) ist in eine zylindrische Bohrung des Glasteiles (12a) eingekittet; das Ende der Lichtleitfaser (12) ist zusammen mit der Oberfläche (12b) dieses Glasteiles plan abgeschliffen und poliert worden. Die Oberfläche (12b) ist auf einen Schichtwellenleiter (13) aufgekittet, dessen Aufbau und Wirkungsweise in einer früheren Anmeldung (Aktenzeichen P 34 46 726.2 des Deutschen Patentamtes) beschrieben wurde. Der Schichtwellenleiter (13) besteht aus einer wellenleitenden Schicht (13a) möglichst mit der gleichen Brechzahl wie der Kern der Lichtleitfaser (12). Ihre Dicke entspricht dem Kerndurchmesser der Lichtleitfaser (12) und ihre Länge ist so gewählt, daß der durch das Konkavgitter (14) hervorgerufene Astigmatismus kompensiert wird. Zur besseren Handhabbarkeit ist die wellenleitende Schicht (13a) zwischen zwei Glasteilen (13b und 13c) mit kleinerer Brechzahl eingekittet. Der Schichtwellenleiter (13) ist seinerseits auf die Koppelfläche (11b) des Tragkörpers (11) aufgekittet.

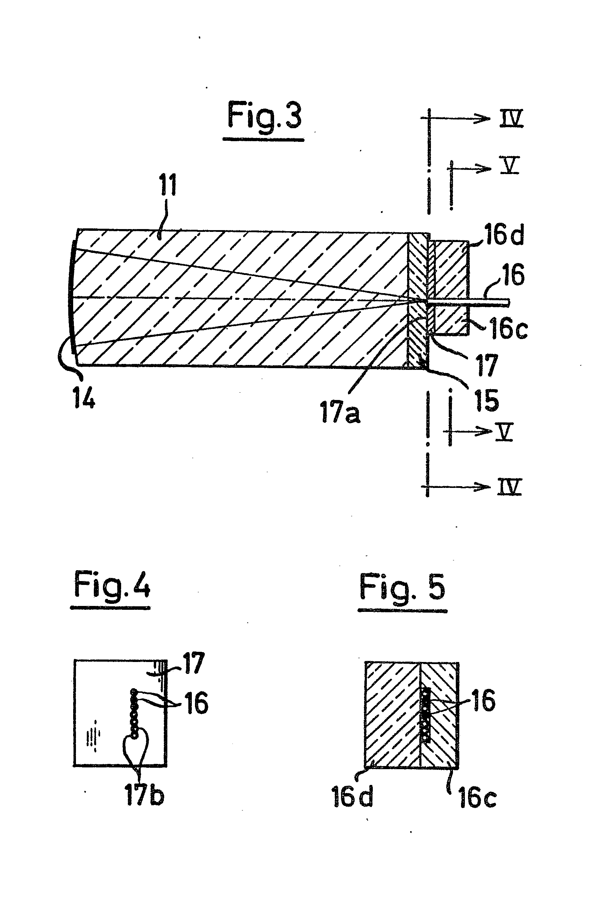

Durch das Konkavgitter (14) entsteht in der Ebene (15a) das Spektrum der in den Demultiplexer über die Lichtleitfaser (12) eingetretenen Strahlung. In der Ebene (15a) müssen daher die Anfangsflächen (16a) der Lichtleitfasern (16) zur Aufnahme der einzelnen Wellenlängenbereiche in exakt der richtigen Lage angeordnet sein. In diese Lage werden die Lichtleitfasern (16), von denen der Übersichtlichkeit wegen nur einige gezeichnet sind, durch die Lochplatte (17) gebracht, die in Figur 4

separat dargestellt ist. Die Lochplatte (17) besteht aus einem
photolithographisch ätzbaren Material, z.B. aus FOTURAN der Fa. Schott,
in das zur Aufnahme der Lichtleitfasern (16) Bohrungen (17b) auf
folgende Weise eingeätzt wurden. Die exakte Lage der Bohrungen
(insbesondere zueinander) läßt sich aufgrund des geometrischen Aufbaues
des Demultiplexers und der Daten des Konkavgitters (14) berechnen.
Entsprechend diesen Daten wird in bekannter Technik z.B. eine
Metallmaske mit der exakten Anordnung der Bohrungen hergestellt. Durch
diese Maske wird das photoempfindliche Spezialglas der Lochplatte (17)
mit parallelem ultraviolettem Licht bestrahlt. Eine anschließende
Wärmebehandlung führt zum Kristallisieren (Entglasen) der bestrahlten
Bereiche durch die gesamte Plattendicke hindurch. Beim nachfolgenden
Ätzprozeß werden dann die kristallisierten Bereiche wesentlich
schneller abgetragen als die anderen Bereiche, so daß in der Lochplatte
(17) die Bohrungen (17b) entstehen. In diese werden dann die
Lichtleitfasern (16) eingekittet, die damit genau die richtige Lage zueinander erhalten.

Da die Lochplatte zweckmäßigerweise verhältnismäßig dünn ausgeführt
wird, ist es vorteilhaft, sie zur Erhöhung der Stabilität auf einen
Verstärkungsklotz aufzukitten, der bei dem dargestellten Ausführungsbeispiel aus den in Figur 5 separat dargestellten Teilen (16c und 16d)
besteht. Das Teil (16c) ist U-förmig ausgebildet und hat eine
Vertiefung, welche die Lichtleitfasern (16) aufnimmt. Das Teil (16d)
ist plattenförmig und wird auf die Fläche mit der Vertiefung
aufgekittet, wobei die Zwischenräume zwischen den Lichtleitfasern (16)
untereinander und zu den Flächen der Teile des Verstärkungsklotzes
ebenfalls mit Kitt ausgefüllt werden. Die Lochplatte (17), die beiden
Teile (16c und 16d) des Verstärkungsklotzes und die Anfänge der
Lichtleitfasern (16) bilden damit eine kompakte und gut handhabbare
Justiereinheit.

Die freie Oberfläche (17a) der Lochmaske (17) mit den Endflächen (16a)
der Lichtleitfasern (16) wird anschließend abgeschliffen und poliert,
so daß die Endflächen (16c) bündig mit der Oberfläche (17a) abschließen
und eine Lichtleitfaserzeile ergeben. Die Oberfläche (17a) ist im dargestellten Ausführungsbeispiel eben; sie kann aber auch mit den in der Optik bekannten Techniken sphärisch oder asphärisch bearbeitet werden, wenn dies z.B. für die Korrektur von Abbildungsfehlern günstiger ist.

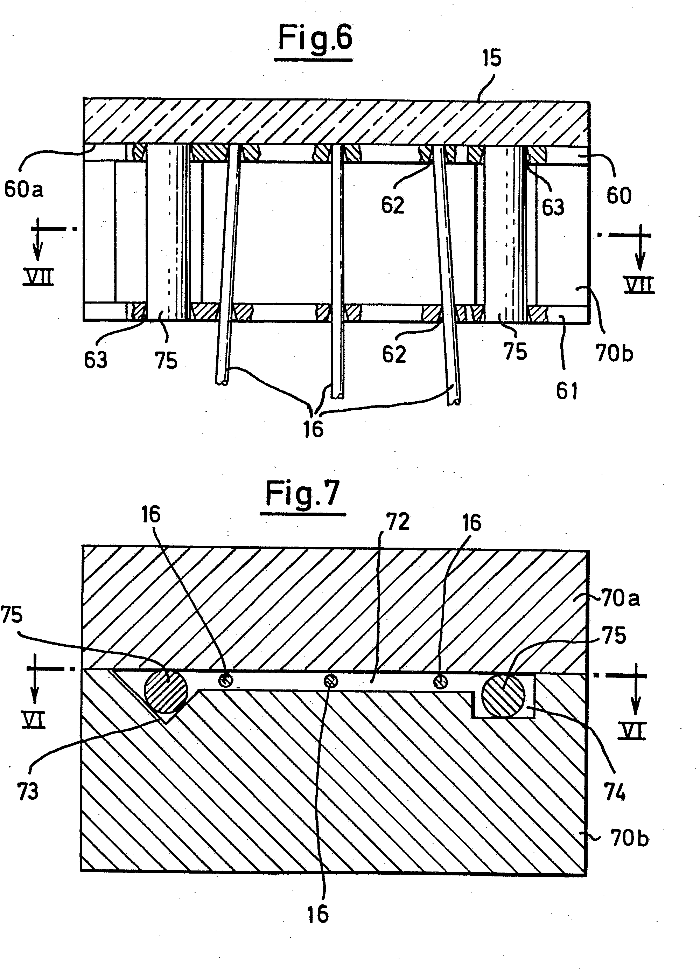

In den Figuren 6 und 7 ist ein anderes - und besonders vorteilhaftes - Ausführungsbeispiel für die Ankopplung der Lichtleitfasern dargestellt, bei dem jede Lichtleitfaser mit ihrer Achse optimal auf das Konkavgitter ausgerichtet ist. Mit (15) ist die gleiche Platte wie in den Figuren 1 und 3 bezeichnet, die - wie später beschrieben wird - zum Ausgleich von Fokusdifferenzen dient. Mit (60) und (61) sind zwei photolithographisch hergestellte Lochplatten bezeichnet, bei denen die Bohrungen (62), welche durch die oben geschilderte Herstellung leicht konisch sind, derart angeordnet sind, daß jede Lichtleitfaser (16) die richtige Ausrichtung erhält. Von den Lichtleitfasern sind wegen der besseren Übersichtlichkeit nur die beiden äußeren und die mittlere dargestellt.

Für einen genau definierten Abstand zwischen den beiden Lochplatten (60) und (61) sorgt ein Zwischenklotz, der in einer besonders günstigen Ausführungsform, die in Figur 7 dargestellt ist, aus den Teilen (70a) und (70b) aufgebaut ist. Diese beiden Teile bilden eine Aussparung (72) für die Lichtleitfasern (16) und zwei Aufnahmen (73) und (74) für zwei Justierstifte (75). Die Lochplatten (60) und (61) besitzen auch für die Justierstifte Bohrungen (63), welche ebenfalls durch den photolithographischen Ätzprozess hergestellt werden und daher eine genau bestimmte und reproduzierbare Lage relativ zu den Bohrungen (62) für die Lichtleitfasern (16) haben.

Beim Zusammenbau wird zunächst ein Justierstift (75) mit etwas Kitt in der Aufnahme (73) des Teiles (70b) vom Zwischenklotz fixiert und der zweite Justierstift (75) in die Aufnahme (74) eingelegt. Dann werden die Lochplatten (60) und (61) auf die Justierstifte (75) von beiden Seiten aufgesetzt und mit dem Teil (70b) verkittet. Anschließend werden die Lichtleitfasern (16) eingesteckt, die Zwischenräume im Schlitz (72) und den Aufnahmen (73) und (74) mit Kitt ausgefüllt und das obere Teil (70a) des Zwischenklotzes, das eine etwas geringere Dicke hat als das untere Teil (70b), eingesetzt und mit den oberen Hälften der Lochplatten (60) und (61) mindestens teilweise verkittet.

Schließlich wird die Oberfläche (60a) mit den etwas herausragenden Enden der Lichtleitfasern (16) und der Justierstifte (75) abgeschliffen und poliert. Um dabei die Stirnflächen der eingekitteten Lichtleitfasern nicht zu verunreinigen, werden die Justierstifte aus denselben oder einem ähnlichen Material wie die Lichtleitfasern hergestellt, z.B. aus Glas oder Quarzglas. Besonders günstig ist es, als Justierstifte Abschnitte von dickeren Lichtleitfasern zu nehmen. Ein erheblich größerer Durchmesser als für die Lichtleitfasern (16) empfiehlt sich dabei wegen der mechanischen Stabilität und wegen der leichteren Handhabbarkeit. Durch die Verwendung von Glas bzw. Quarzglas für die Justierstifte werden außerdem mechanische Spannungen bei Temperaturänderungen vermieden.

Falls der photolithographische Ätzprozess Bohrungen liefert, deren Kegelwinkel kleiner ist als die maximale Neigung der Lichtleitfasern gegen die Plattennormale, wird bei der Herstellung eine Doppelbelichtung unter zwei verschiedenen Winkeln zur Plattennormalen vorgenommen.

Demultiplexer sollen ein möglichst geringes Übersprechen aufweisen, d.h. eine möglichst geringe Übertragung des Signales eines Kanales in einen Nachbarkanal. Dort wo die Lichtleitfasern an den Tragkörper (11) bzw. die Platte (15) angesetzt werden, kann Strahlung am Rande des jeweils benutzten Wellenlängenbereiches auch in die Stirnflächen der Fasermäntel eindringen. Da die Strahlung im Mantel - anders als im Kern der Lichtleitfaser - nicht geführt wird, kann sie diesen auch wieder verlassen und über den Kitt und den Mantel der Nachbarlichtleitfaser in deren Kern gelangen. Dieses Übersprechen wird verhindert, indem für das Einkitten der Lichtleitfasern (16) in die Lochplatte(n) (17, 60 bzw. 61) und das Verkitten der Lichtleitfasern (16) mit den Teilen (16c) und (16d) des Verstärkungsklotzes bzw. mit den Teilen (70a) und (70b) des Zwischenklotzes kein transparenter, sondern ein absorbierender (schwarzer) Kitt verwendet wird.

Für die Herstellung des Demultiplexers ist es vorteilhaft, zwischen der Lochplatte (17) bzw. (60) und dem transparenten Tragkörper (11) eine Platte (15) mit abgestimmter Dicke anzuordnen. Durch sie lassen sich die Toleranzen für den Tragkörper (11) und das Konkavgitter (14) in wirtschaftlichen Grenzen halten trotz des Umstandes, daß bei einem kompakten Tragkörper keine Fokussiermöglichkeit durch mechanische Verstellung besteht.

Bei der Montage des Demultiplexers wird zunächst die Eingangsfaser (12) mit dem Halteteil (12a) an den Schichtwellenleiter (13) und dieser an die Koppelfläche (11b) des transparenten Tragkörper (11) angekittet. Anschließend wird der Abstand des Spektrums von der Oberfläche (11c) des Tragkörpers (11) optisch-mechanisch gemessen und damit die erforderliche Dicke der Platte (15) bestimmt. Bei Einzelanfertigung von Demultiplexern wird die Platte (15) erst nach der Dickenbestimmung auf die richtige Dicke bearbeitet; bei Serienanfertigung wird ein Sortiment geeigneter Platten vorrätig gehalten und die jeweils richtige ausgewählt. Der Tragkörper (11) wird in der entsprechenden Abmessung grundsätzlich um so viel kürzer gemacht, daß die Platte (15) in jedem Fall eine ausreichende Dicke erhält. Durch die Platte (15) wird außerdem - wie man unmittelbar aus der Figur 1 erkennt - die Herstellung des Tragkörpers (11) vereinfacht.

Nachdem die in der Dicke abgestimmte Platte (15) auf die Lochplatte (17) bzw. (60) aufgekittet ist, wird die gesamte Einheit einschließlich Verstärkungsklotz bzw. Zwischenklotz und Lichtleitfasern (16) auf die Koppelfläche (11c) des Tragkörpers (11) aufgesetzt, justiert und ebenfalls aufgekittet. Die Justierung kann dabei z.B. so erfolgen, daß für die zwei an den Rändern liegenden Lichtleitfasern (16) ein möglichst großes Signal bei Einstrahlung der entsprechenden Wellenlängenbereiche über die Eingangslichtleitfaser (12) entsteht.

Selbstverständlich kann der Demultiplexer zum Schutz gegen mechanische Beanspruchung und gegen Außenlicht in ein geeignetes - nicht gezeichnetes - Gehäuse eingesetzt werden. Anstelle des im Ausführungsbeispiel dargestellten Konkavgitters kann der Multiplexer natürlich auch mit einem Plangitter und einem Hohlspiegel ausgerüstet sein.

Patentansprüche:

1. Wellenlängenmultiplexer oder -demultiplexer bestehend aus einem transparenten Tragkörper (11) mit einem Beugungsgitter (14) und mindestens einer Koppelfläche (11b, 11c) zum Anschluß von Lichtleitfasern (12, 16), dadurch gekennzeichnet, daß mehrere Lichtleitfasern (16) in einer Lochplatte (17, 60) aus einem photolithographisch ätzbaren Material fixiert sind, daß die Anschlußflächen (16a) der Lichtleitfasern (16) gemeinsam mit der Oberfläche (17a, 60a) der Lochplatte (17, 60) bearbeitet sind und daß die Lochplatte (17, 60) an die Koppelfläche (11c bzw. 15a) angeschlossen ist.

2. Vorrichtung nach Anspruch 1, dadurch gekennzeichnet, daß die Lochplatte (17, 60) aus ätzbarem Glas oder Silizium ist.

3. Vorrichtung nach Anspruch 1 oder 2, dadurch gekennzeichnet, daß die Lochplatte (17) zur Erhöhung ihrer Stabilität auf der dem Tragkörper (11) abgewandten Seite mit einem Verstärkungsklotz (16c, 16d) verbunden ist.

4. Vorrichtung nach Anspruch 3, dadurch gekennzeichnet, daß der Verstärkungsklotz (16c, 16d) aus einem U-förmigen Teil (16c), in das die Lichtleitfasern (16) eingekittet sind, und aus einem plattenförmigen Teil (16d) aufgebaut ist.

5. Vorrichtung nach Anspruch 1 oder Anspruch 2, dadurch gekennzeichnet, daß die Lichtleitfasern (16) zusätzlich in einer zweiten Lochplatte (61) aus einem photolithographisch ätzbaren Material, die in einem definierten Abstand von der ersten Lochplatte angeordnet ist, fixiert sind.

6. Vorrichtung nach Anspruch 5, dadurch gekennzeichnet, daß die Bohrungen (62) für die Lichtleitfasern (16) auf der zweiten Lochplatte (61) mit anderen Abständen angeordnet sind als auf der ersten Lochplatte (60).

7. Vorrichtung nach Anspruch 5 oder Anspruch 6, dadurch gekennzeichnet, daß zwischen der ersten Lochplatte (60) und der zweiten Lochplatte (61) ein vorzugsweise zweigeteilter Zwischenklotz (70a, 70b) mit definierter Dicke eingekittet ist, der einen Ausschnitt (72) für die Lichtleitfasern (16) hat.

8. Vorrichtung nach Anspruch 7, dadurch gekennzeichnet, daß der Zwischenklotz (70a, 70b) Aufnahmen (73, 74) für zwei Justierstifte (75) hat und daß die Lochplatten (60, 61) Bohrungen (63) für die Justierstifte (75) haben, die in definierten Abständen zu den Bohrungen (62) für die Lichtleitfasern (16) angeordnet sind.

9. Vorrichtung nach einem der Ansprüche 1 bis 8, dadurch gekennzeichnet, daß die Lichtleitfasern (16) in die Lochplatte (17, 60 bzw. 61) und in den Verstärkungsklotz (16c, 16d) oder Zwischenklotz (70a, 70b) mit absorbierendem Kitt eingekittet sind.

10. Vorrichtung nach einem der Ansprüche 1 bis 9, dadurch gekennzeichnet, daß zum Ausgleich von Fokusdifferenzen zwischen dem Tragkörper (11) und der Lochplatte (17, 60) eine Platte (15) mit abgestimmter Dicke angeordnet ist.

0194612

## Fig.1

## Fig.2

0194612

## Fig.3

## Fig.4

## Fig. 5

## Fig.6

## Fig.7